# EUROPEAN PATENT APPLICATION

(11) **EP 2 383 468 A1**
(43) Date of publication of application: **02.11.2011**
(21) Application number: 11163774.0
(22) Date of filing: 26.04.2011
(51) Int. Cl.: F03D 11/00, F03D 11/02, F16D 1/05

(54) **System and method for connecting shafts of a wind turbine**

(30) Priority: 29.04.2010 US 770406
(71) Applicant: General Electric Company, Schenectady, NY 12345 (US)
(72) Inventor: Blokhuis, Yvo, 7481 EG, Haaksbergen (NL); Hidding, Edwin, 46414, Rhede (NL)
(74) Representative: Bedford, Grant Richard

(57) **Abstract**

The present disclosure relates to a plug shaft (100) and/or a socket shaft (200) for use in a shaft connection system (300, 500, 800) of a wind turbine. The plug shaft (100) includes a tapered plug end portion (110) for engaging a tapered socket end portion (210, 682, 683) in the shaft connection system (300, 500). The socket shaft (200) includes a tapered socket end portion (210) for engaging a tapered plug end portion (110, 782, 783) in the shaft connection system (300, 800). The present disclosure also relates to a shaft connection system (300, 500, 800) of a wind turbine. The shaft connection system (300, 500, 800) includes a first shaft (100, 200) comprising a first tapered end portion (110, 210) and a second shaft (100, 200, 600, 800) comprising a second tapered end portion (110, 210, 610, 810).

## Description

The present disclosure relates generally to shafts, typically shafts of a wind turbine. Particularly, it relates to a plug shaft and/or a socket shaft of a wind turbine.

Further, it relates to a shaft connection system of two shafts in a wind turbine.

The present disclosure also relates to a method of connecting shafts in a wind turbine.

Wind power plants more and more become an important factor in reaching economical and ecological goals in power production. In a wind power plant, power is produced by a wind turbine that is driven by the wind and transmits its force via a shaft system to a power generator. Two main concepts of wind turbines exist. One is a direct driven concept in which the rotor shaft is directly driving the generator. The second one includes a gearbox with a gearbox shaft that is connected to a main shaft of the rotor to transmit the driving force to a power generator.

For transmitting the driving force, the gearbox shaft and the main shaft are connected by a shaft connection system. In a conventional shaft connection system, the gearbox shaft and the main shaft are cylindrical, and are either placed with their flat ends against each other or are fitted one inside the other with low tolerance. A shrink disc is placed around the shafts where they connect. The shrink disc exerts a radial pressure and thereby couples the two shafts.

However, there may be places where there is not much space on the outside of the shafts, e.g. between the gearbox and the bearing of the main shaft. A short shrink disc may lead to reduced coupling. Also, in conventional connection systems, centering of the shafts, or maintaining the parts of the shrink disc connection, e.g. its bolts, may be problematic.

Consequently, there is a need for improved shafts of wind turbines and for improved shaft connection systems.

In light of the above, according to one aspect of the present invention, a plug shaft for use in a shaft connection system of a wind turbine is provided. The plug shaft includes a tapered plug end portion for engaging a tapered socket end portion. The tapered socket end portion is part of the shaft connection system.

According to another aspect, a socket shaft for use in a shaft connection system of a wind turbine is provided. The socket shaft includes a tapered socket end portion for engaging a tapered plug end portion. The tapered plug end portion is part of the shaft connection system.

According to another aspect, a shaft connection system of a wind power plant is provided. The shaft connection system includes a first shaft including a first tapered end portion and a second shaft including a second tapered end portion.

According to yet another aspect, a method of connecting a first shaft and a second shaft of a wind turbine is provided. The method includes connecting a tapered end portion of the first shaft with a tapered end portion of the second shaft.

The shafts, system and method of solve the technical problem of improving shaft connection. In particular, a coupling frictional force may be enhanced, complexity of the connection reduced, and precious space and costs saved.

Embodiments are also directed to methods for manufacturing and operating the disclosed shafts and shaft connection systems. These method steps may be performed manually or automated, e.g. controlled by a computer programmed by appropriate software, by any combination of the two or in any other manner.

Various aspects, advantages, and features of the present invention are apparent from the dependent claims, the description and the accompanying drawings, in which:
Figs. 1-4 show longitudinal sections of plug shafts according to embodiments described herein;
Figs. 5-7 show longitudinal sections of socket shafts according to embodiments described herein;
Fig. 8 shows a longitudinal section of a plug-socket shaft connection system according to embodiments described herein;
Fig. 9 shows a cross-sectional view of the shaft connection system of Fig. 8 along the line A-A in Fig. 8;
Fig. 10 shows a longitudinal section of a plug-socket shaft connection system according to embodiments described herein;
Fig. 11 shows a longitudinal section of a plug-plug shaft connection system according to embodiments described herein;
Fig. 12 shows a longitudinal section of a socket-socket shaft connection system according to embodiments described herein;
Figs. 13-15 show longitudinal sections of parts of shaft connection systems according to embodiments described herein.

Reference will now be made in detail to the various exemplary embodiments, one or more examples of which are illustrated in the figures. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described. The structures shown in the drawings are not depicted true to scale but rather serve only for the better understanding of the embodiments.

The term "plug shaft" as used herein refers to a shaft the outer surface of which is at least partly tapered. Moreover, the term "tapered plug end portion" as used herein refers to the tapered part of the plug shaft. Similarly, the term "socket shaft" as used herein refers to a shaft the inner surface of which is at least partly tapered. Further, the term "tapered socket end portion" or "tapered hole" as used herein refer to the tapered part of the socket shaft. The term "tapered end portion" may refer to either a tapered plug end portion or a tapered socket end portion. Therein, "inner" and "outer" are to be understood in relation to the shaft axis. The radial direction pointing away from the shaft axis is called radially outward direction, and the radial direction pointing to the shaft axis is called radially inward direction. Typically, an outer surface of an object, e.g. a shaft or a portion thereof, is farther away from the shaft axis in radially outward direction than an inner surface of the object. Further, a normal vector of a surface of an object is a vector pointing away from the object. Then, typically, an outer surface of an object has an average or mean normal vector that has a component in radially outward direction. Similarly, an inner surface of an object has an average or mean normal vector that has a component in radially inward direction.

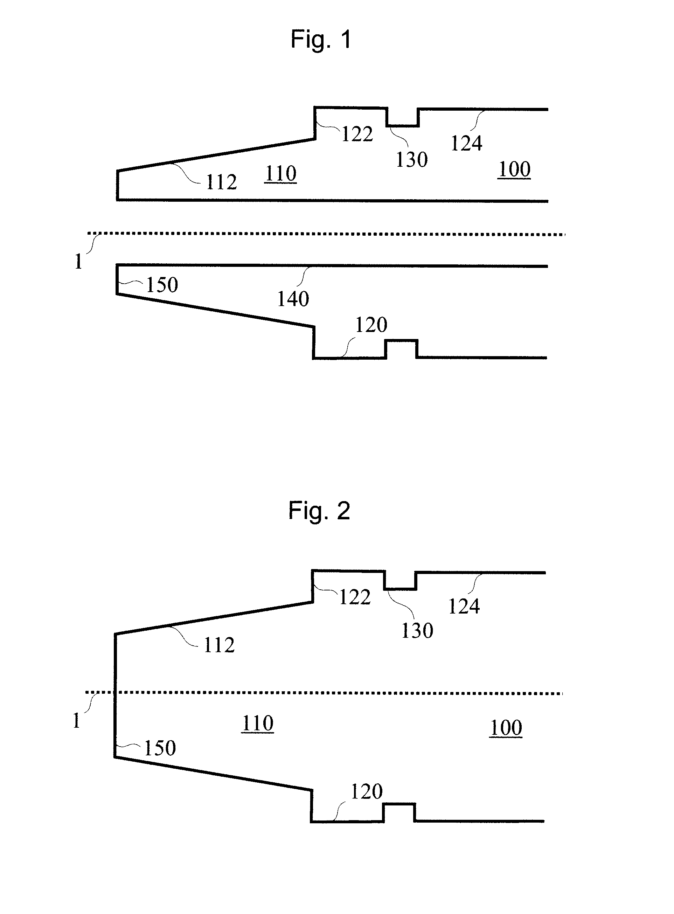

Fig. 1 illustrates an embodiment of a plug shaft 100. The plug shaft includes a tapered plug end portion 110. The tapered plug end portion 110 is adapted for engaging a tapered socket end portion. As will be described later, such a tapered socket end portion may be a portion of a socket shaft or of a double-socket connector.

Further, the plug shaft 100 has an outer surface 120. The tapered plug end portion 110 has a tapered outer surface 112 which is part of the outer surface 120. The tapered outer surface 112 may e.g. be from 100 mm to 600 mm long, typically from 200 mm to 500 mm, such as 300 mm. The average shaft diameter can e.g. be from 200 mm to 1000 mm, typically from 500 to 800 mm, such as 650 mm. These numbers can e.g. relate to a 1.5 MW or 2.4 MW wind power plant. Generally, the torsional momenta Mₜ are proportional to the length of the tapered surface (contact length L) and to the square of the average diameter of the shaft Dₐᵥₑ as specified by the formula Mₜ=1/2 π p µ Dₐᵥₑ² L. Therein, p is the contact pressure and µ the coefficient of friction. The contact length L and the average diameter are relevant dimensions for the torque transmission capacity. The larger these dimensions are the higher is the torsional momentum that can be transmitted. For instance, in a 1.5 MW plant, the torsional momentum can be Mₜ=2400 kNm. Typically, shafts are made of high strength materials, e.g. steel or other castings. These high strength materials may, for instance, have coefficients of friction µ from 0.05 to 0.25, typically from 0.1 to 0.2, such as 0.15.

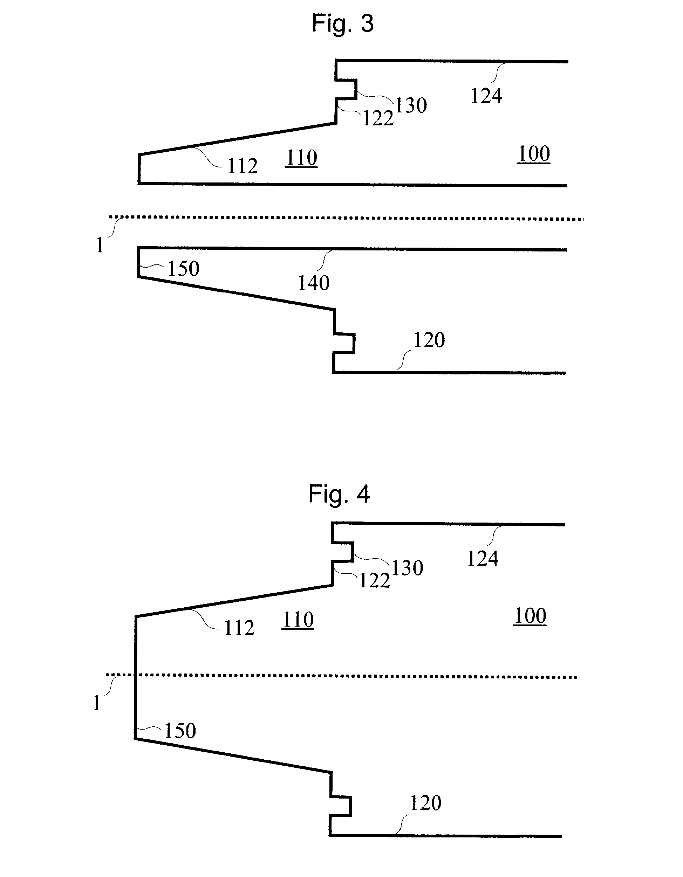

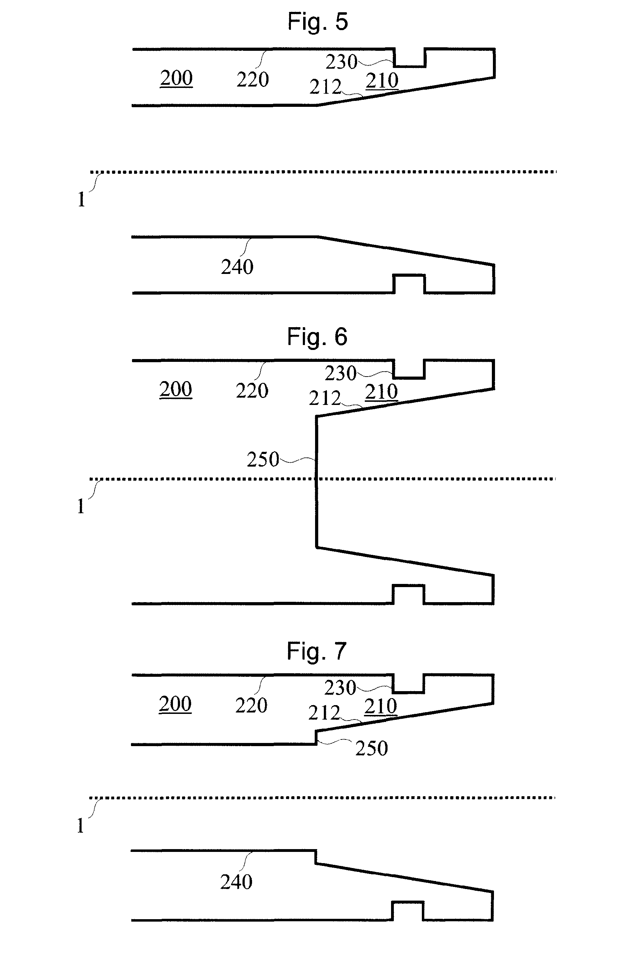

In Fig. 1, the outer surface 120 has a coaxial surface part 124 parallel to the shaft axis 1 and a radial surface part 122 vertical to the shaft axis 1. In the embodiment shown in Fig. 1, the radial surface part 122 delimits the tapered plug end portion 110 from the main part of the shaft. In some embodiments, the plug shaft 100 has no radial surface part 122. Such an embodiment of a plug shaft 100 is illustrated in Fig. 6.
In some embodiments, as illustrated in Fig. 1, the plug shaft further includes a plug shaft fastening portion 130. The plug shaft fastening portion 130 may be adapted for fastening the plug shaft to a socket shaft. In other embodiments, the plug shaft fastening portion is adapted for fastening the plug shaft to a second plug shaft via a double-socket connector. The plug shaft fastening portion 130 is arranged at the outer surface 120. In Fig. 1, the plug shaft fastening portion 130 is arranged in the coaxial surface part 124. In other embodiments shown in Figs. 3 and 4, the plug shaft fastening portion 130 is arranged in the radial surface part 122.

The plug shaft fastening portion may be a circumferential groove or trench or channel. Alternatively, the plug shaft fastening portion may be one recess or a plurality of recesses in the outer surface 120, e.g. boreholes or the like. Yet alternatively, the plug shaft fastening portion may be a protrusion in the outer surface 120, e.g. a protrusion with coaxial holes for passing fastening means therethrough. The plug shaft fastening portion may be adapted for fastening the plug shaft to a second shaft, e.g. by rings, bolts, screws or other fastening means.

As illustrated in Figs. 1 and 3, the plug shaft 100 may have an inner surface 140. In other words, the plug shaft 100 may be hollow. Figs. 2 and 4 show other embodiments of the plug shaft 100, wherein the plug shaft is solid or filled with a material. In the embodiments shown in Figs. 1-4, the plug shaft 100 has a front surface 150, which is ring-like in Figs. 1 and 3 and circular in Figs. 2 and 4. Alternatively, the plug shaft may be pointed, in which case a front surface would be substantially absent. Here, "substantially absent" means that the tip of the plug shaft need not be pointed on a microscopic scale. For instance, a "front surface" may still be present, but which is at least two orders of magnitude smaller than the diameter of the shaft.

The plug shaft may be a gearbox shaft of a wind turbine or a generator shaft. The plug shaft may be a main shaft of the wind turbine.

The tapering angle of the tapered plug end portion 110, measured with respect to the axis of the plug shaft, is larger than 0°. In some embodiments, the tapering angle is from 0.5° to 30°, more typically from 1° to 10°, even more typically from 2° to 6°, such as 4°. Small tapering angles provide for a longer tapered outer surface 112, increasing friction forces upon engagement with a corresponding socket end portion.

Fig. 5 illustrates an embodiment of a socket shaft 200. The socket shaft includes a tapered socket end portion 210. The tapered socket end portion 210 is adapted for engaging a tapered plug end portion, e.g. the tapered plug end portion 110 described above.

The tapered socket end portion 210 has a tapered inner surface 212. The tapered inner surface 212 may e.g. be from 100 mm to 600 mm long, typically from 200 mm to 500 mm, such as 300 mm. The average shaft diameter can e.g. be from 200 mm to 1000 mm, typically from 500 to 800 mm, such as 650 mm. These numbers can e.g. relate to a 1.5 MW or 2.4 MW wind power plant. In Fig. 5, the tapered inner surface 212 is part of an inner surface 240. In the embodiment of Fig. 5, the socket shaft 200 is hollow. Fig. 6 shows another embodiment of the socket shaft 200, wherein the socket shaft is solid or filled with a material. In Fig. 6, the tapered inner surface 212 forms the whole inner surface. In the embodiment shown in Fig. 6, the socket shaft 200 has an inner front surface 250. This inner front surface 250 is circular in the embodiment shown in Fig. 6. The tapered socket end portion 210 is also referred to as a tapered hole. Fig. 7 illustrates an embodiment wherein the socket shaft is hollow similar as in the embodiment of Fig. 5, but has an inner front surface 250, which is annular in shape. The inner front surface 250 may be used as a stopping position, e.g. for longitudinal calibration.

Further, the socket shaft 200 may have an outer surface 220. In some embodiments, as illustrated in Figs. 5, 6, and 7, the socket shaft further includes a socket shaft fastening portion 230. The socket shaft fastening portion may be adapted for fastening the socket shaft to a plug shaft. The socket shaft fastening portion may be arranged at the outer surface 220. In Figs. 5, 6, and 7, the socket shaft fastening portion 230 is arranged in the tapered socket end portion 210, which may be advantageous if space on the outside of the socket shaft is limited. Alternatively, the socket shaft fastening portion may be arranged in the main portion of the socket shaft.

The socket shaft fastening portion may be a circumferential groove or trench or channel. Alternatively, the socket shaft fastening portion may be one recess or a plurality of recesses in the outer surface, e.g. boreholes or the like. Yet alternatively, the socket shaft fastening portion may be a protrusion in the outer surface, e.g. a protrusion with coaxial holes for passing fastening means therethrough. The socket shaft fastening portion may be adapted for fastening the socket shaft to a second shaft such as the plug shaft, e.g. by rings, bolts, screws or other fastening means.
The socket shaft may be the main shaft of the wind turbine. The socket shaft may be the gear box shaft of the wind turbine.

The tapering angle of the tapered socket end portion 220, measured with respect to the axis of the socket shaft, is larger than 0°. In some embodiments, the tapering angle is from 0.5° to 30°, more typically from 1° to 10°, even more typically from 2° to 6°, such as 4°. Small tapering angles provide for a longer tapered inner surface 212, increasing friction forces upon engagement with a corresponding plug end portion.

According to further embodiments, a shaft fastener is provided. The shaft fastener may be adapted to fasten a plug shaft and a socket shaft, acting as plug-socket shaft fastener, or to fasten a first plug shaft and a second plug shaft, acting as plug-plug shaft fastener, or to fasten a first socket shaft and a second socket shaft, acting as socket-socket shaft fastener. The shaft fastener typically exerts coaxial forces to fasten the two respective shafts. In other embodiments, the shaft fastener may, additionally or alternatively, provide radial forces. The shaft fastener may include a first and/or second circumferential shaft clamp, e.g. a first and/or second shaft ring. In some embodiments, the shaft fastener includes a securing portion, e.g. fastening means such as bolts or screws, possibly with nuts. The securing portion may join circumferential shaft clamps or be adapted to connect directly to shaft fastening means of a shaft, e.g. boreholes. A further embodiment of a shaft fastener is provided by a clamp system or the like. The clamp system may, e.g., be adapted to connect protrusions acting as shaft fastening means of respective shafts.

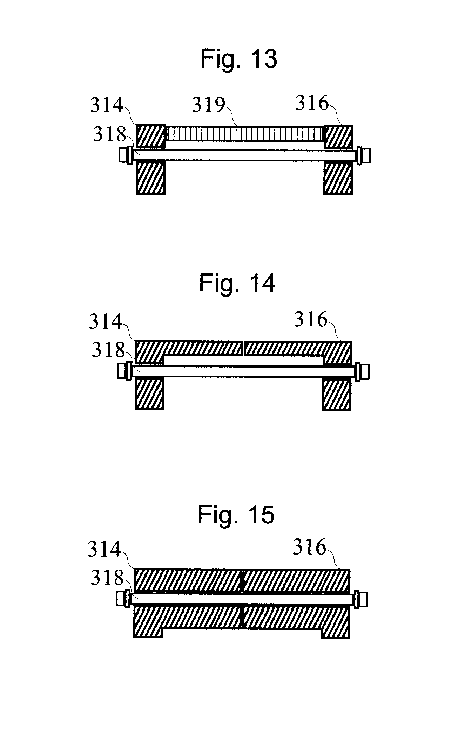

Figs. 13-15 show longitudinal sections of shaft fasteners according to embodiments described herein. In Figs. 13-15, the shaft fasteners are ring-like, but the lower parts of the rings are not shown. The shaft fastener shown in Fig. 13 includes two shaft rings 314, 316, which are joined by bolts 318, and a spacer ring 319. The spacer ring 319 is typically made of two half-rings. Likewise, the two shaft rings 314 and 316 are typically made of two half-rings. The spacer ring 319 prevents bending of the shaft rings 314, 316 under the force exerted by the bolts 318. Further, assembling and end of assembling sequence are defmed by the spacer ring 319 which pre-defines clamping forces between the tapered portions. The function of the spacer ring 319 may alternatively be integrated into the shaft rings 314, 316 as shown in Figs. 14 and 15. Thereby, no additional parts are needed. In Fig. 14, the shaft rings 314, 316 include a longitudinal protrusion in their outermost part, the protrusion forming a ring-like structure. In Fig. 15, the shaft rings 314, 316 are strengthened in that the protrusion runs over the whole thickness of the shaft rings outside of the parts that are to engage shaft fastening means, which will be described later.

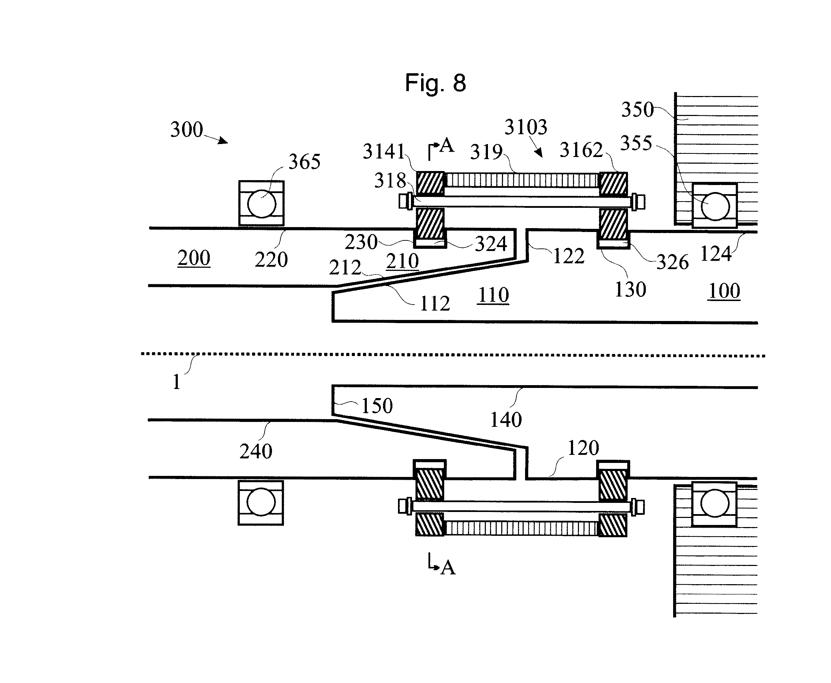

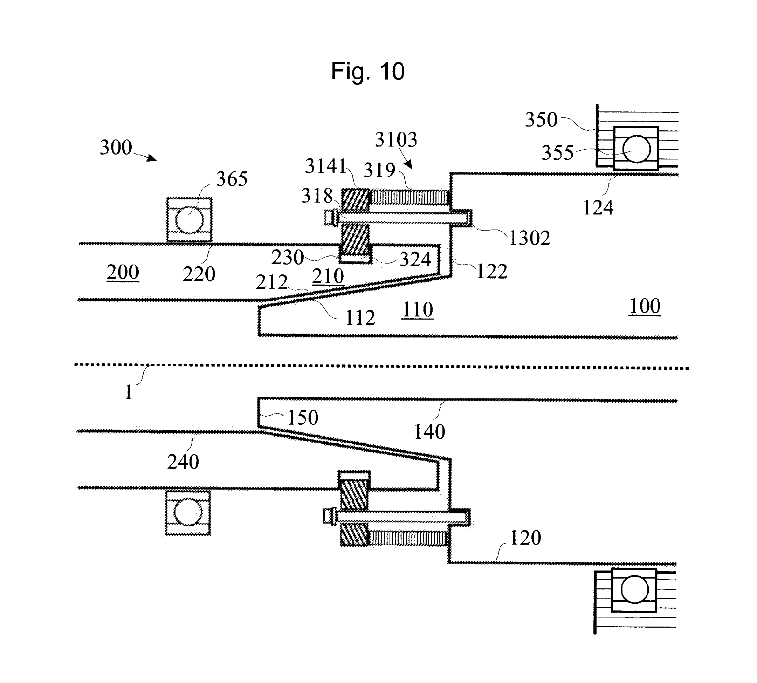

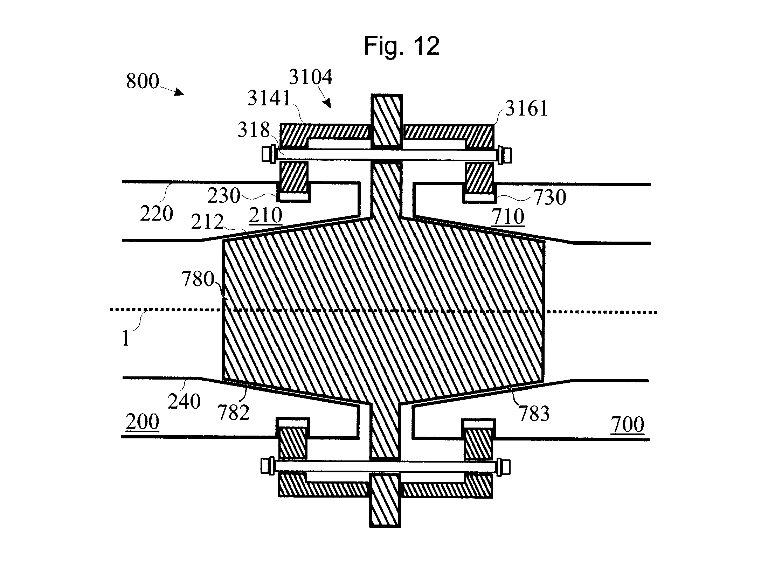

Embodiments of shaft fasteners as shown in Figs. 13-15 can be combined with any of the embodiments described herein. While Figs. 8 and 10 show shaft fasteners similar as in Fig. 13, Fig. 6 shows shaft fasteners similar as in Fig. 15, and Fig. 12 shows shaft fasteners similar as in Fig. 14, it is to be understood, that these choices are for illustrative purposes only, and that any shaft fastener according to embodiments described herein can be used instead.

According to further embodiments, a shaft connection system of the wind turbine is provided. Fig. 8 illustrates an embodiment of the shaft connection system, namely a plug-socket shaft connection system 300 including a plug shaft 100 as described with respect to Fig. 1, and a socket shaft 200 as described with respect to Fig. 5. In further embodiments, a different plug shaft such as the plug shaft 100 described with respect to Figs. 2-4, and/or a different socket shaft such as the socket shaft 200 described with respect to Fig. 6 are included in the shaft connection system.

In Fig. 8, the tapered plug end portion 110 of the plug shaft 100 engages the tapered socket end portion 210 of the socket shaft 200. The tapered outer surface 112 is at least partly in contact with the tapered inner surface 212. The contacting surface parts form the friction area for coupling the shafts. As this friction area is not on the outside, but on the inside of the shaft connection system, limited space on the outside does not limit the size of the friction area. The size of the friction area depends on the tapering angles of the shafts. A large friction force for coupling the shafts may be needed in wind turbines of wind power plants since the torsional momenta involved may also be large. Typically, the tapering angles are substantially the same, which means that the tapering angles are typically identical to within at most 1°, e.g. ±5' for contact length L > 400 mm.

By the tapering of their end portions, the two shafts are auto-centered with respect to each other when engaged. Further, a low amount of parts is needed for the shaft connection system, which does not necessarily need a shrink disc and is therefore also referred to as a shrink-fit connection or auto shrink-fit connection.

According to some embodiments, as shown in Fig. 8, the shaft connection system 300 further comprises a shaft fastener, which may act as a plug-socket shaft fastener 3103 that fastens the plug shaft 100 and the socket shaft 200. In typical embodiments, the plug-socket shaft fastener 3103 engages the plug shaft fastening means 130 and the socket shaft fastening means 230 for fastening the plug shaft 100 and the socket shaft 200. Typically, the plug-socket shaft fastener 3103 exerts coaxial forces. In other words, the plug-socket shaft fastener 3103 pulls the two shafts together such that their tapered end portions 110 and 210 connect tightly. Alternatively, a plug-socket shaft fastener may be used that exerts, additionally or alternatively, radial forces, e.g. like a conventional shrink disc.

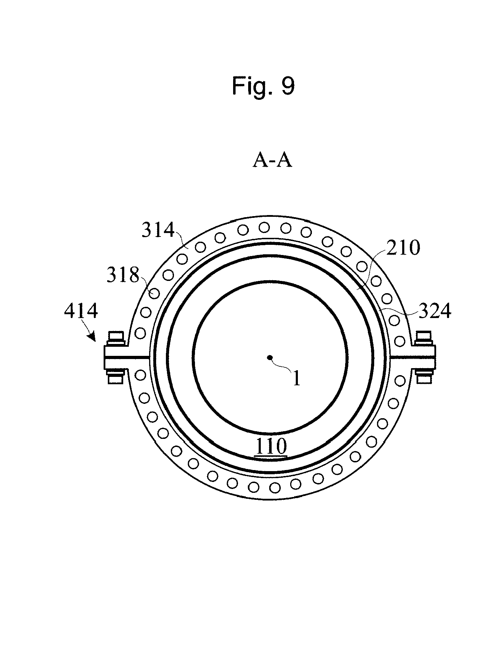

In some embodiments, the plug-socket shaft fastener 3103 includes a circumferential socket shaft clamp, e.g. a socket shaft ring 3141 illustrated by Figs. 8 and 9. The socket shaft ring 3141 may have coaxial holes for passing fastening means 318 therethrough, e.g. bolts or screws, possibly with nuts. As shown in Fig. 9, the socket shaft ring 314 may include, or be formed of, two half rings connected by fastening means 414, e.g. bolts or screws, possibly with nuts. The socket shaft ring 3141 engages the socket shaft fastening portion 230. In some embodiments, as shown in Figs. 8 and 9, the socket shaft ring 3141 engages and runs within a circumferential socket shaft groove 230. The socket shaft ring 3141 may provide a clearance 324 between its inside and the bottom of the circumferential socket shaft groove 230. Such a clearance may provide tolerances for easier set-up, maintenance and operation without impairing the functionality of the socket shaft ring. In particular, the clearance can help to prevent bending of the bolts 318 as the tapered portion 210 may deform radially outward due to the shrink connection. Such a deformation may be reduced by using the strengthened shaft fasteners as shown in Fig. 15.

In some embodiments, the plug-socket shaft fastener 3103 may further include a circumferential plug shaft clamp, e.g. a plug shaft ring 3162 as shown in Fig. 8. The plug shaft ring 3162 may be identical with, or similar to, the socket shaft ring 3141. In particular, the plug shaft ring 3162 may have coaxial holes for passing fastening means 318 therethrough, e.g. bolts or screws, possibly with nuts. The plug shaft ring 3162 may include, or be formed of, two half rings connected by fastening means, e.g. bolts or screws, possibly with nuts. The plug shaft ring 3162 engages the plug shaft fastening portion 130. In some embodiments, as shown in Fig. 8, the plug shaft ring 3162 engages and runs within a circumferential plug shaft groove 130. The plug shaft ring 3162 may provide a clearance 326 between its inside and the bottom of the circumferential plug shaft groove 130. Some advantages of a clearance have been discussed above and are the same here.

The plug-socket fastener 3103 may further include a securing portion, e.g. bolts or screws, possibly with nuts. In some embodiments, as shown in Fig. 8, the securing portion are bolts 318 which join the socket shaft ring 3141 and the plug shaft ring 3162. The plug-socket shaft fastener 3103 may further include a spacer ring 319.

In other embodiments, as shown in Fig. 10, the shaft connection system 300 includes a plug shaft 100 as described with respect to Fig. 3, and a socket shaft 200 as described with respect to Fig. 5. The plug-socket shaft fastener 3103 includes a socket shaft ring 3141 as described in the foregoing. The plug-socket shaft fastener 3103 further includes a securing portion, e.g. screws 318. As shown in Fig. 10, the screws may be driven into boreholes 1302 in the radial surface part 122, joining the socket shaft ring 3141 and the boreholes 1302. In Fig. 10, the plug-socket shaft fastener 3103 includes a spacer ring 319. In the embodiments described herein, all parts of the plug-socket fastener 3103 can be easily accessed for maintenance purposes.

In further embodiments, the circumferential socket shaft clamp and/or the circumferential plug shaft clamp may be integrated with the respective shafts. In this case, the circumferential socket shaft clamp may be identical to the socket shaft fastening portion, e.g. in form of a protrusion. Similarly, the circumferential plug shaft clamp may be identical to the plug shaft fastening portion, e.g. in form of a protrusion. The plug-socket shaft fastener 3103 may then consist of a securing portion, e.g. in form of bolts or clamps. While fewer parts are needed, tolerances are less as there is no clearance 324, 326.

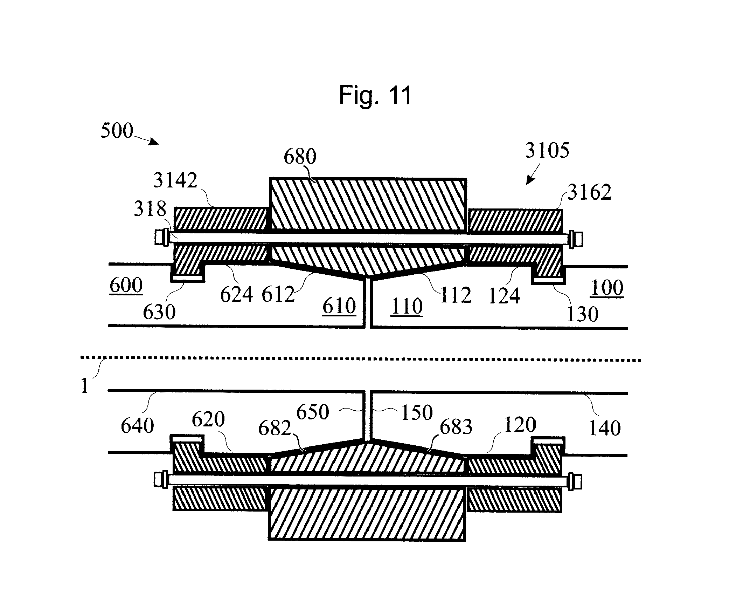

According to further embodiments, a wind turbine is provided. Generally, the wind turbine may be the wind turbine of a wind power plant, typically an industrial wind power plant generating electrical power to be fed into regional, national or international power networks. The wind turbine includes a shaft connection system 300 as described herein. The wind turbine may further include a main bearing 365 and a gearbox 350 with a gearbox bearing 355, shown in Figs. 8 and 10. In other embodiments, the roles of the plug shaft and the socket shaft, e.g. as gearbox shaft and main shaft, respectively, may be interchanged. In alternative embodiments, the wind turbine includes a shaft connection system 500 as described with respect to Fig. 11 below, or a shaft connection system 800 as described with respect to Fig. 12 below.

According to a further embodiment, a double-socket connector 680 is provided. As shown in Fig. 11, the double-socket connector 680 includes a first tapered socket end portion 682 for engaging a first tapered plug end portion, and a second tapered socket end portion 683 for engaging a second tapered plug end portion. The double-socket connector 680 may be adapted to be circumferential to a first and second plug shaft. The double-socket connector 680 may be a double-socket ring. The double-socket connector 680 may have coaxial through-holes for passing fastening means 318 therethrough.

According to further embodiments, a shaft connection system is provided. As illustrated in Fig. 11, the shaft connection system may be a plug-plug shaft connection system 500, The plug-plug shaft connection system 500 includes a first plug shaft 100, including a first tapered plug end portion 110, and a second plug shaft 600, including a second tapered plug end portion 610. According to some embodiments, the first and second plug shaft are similar to each other or even identical, or, at least, include similar or identical tapered plug end portions. However, in other embodiments, they may be different.

The first plug shaft may be the gearbox shaft, the second plug shaft the main shaft of the wind turbine or vice versa.

The second plug shaft 600 may include at least one of the following: an outer surface 620 with a tapered surface part 612 and a coaxial surface part 624, a plug shaft fastening portion 630, an inner surface 640, and a front surface 650.

In typical embodiments, the plug shaft connection system 500 includes a circumferential double-socket connector 680 including a first tapered socket end portion 682 engaging the first tapered plug end portion 110 and a second tapered socket end portion 683 engaging the second tapered plug end portion 610.

The plug shaft connection system may further include a plug-plug shaft fastener 3105 for fastening the first plug shaft 100 and the second plug shaft 600. In Fig. 11, the plug-plug shaft fastener 3105 is similar to, or identical with, the plug-socket shaft fastener 3103 described with respect to Fig. 8, except that, instead of a spacer ring, the shaft rings 3142, 3162 themselves provide stability against bending under pressure from the securing portion 318. To this aim, the shaft rings 3142, 3162 include longitudinal protrusions forming a ring-like structure whose inner side is in contact with a shaft. Typically, the securing portion 318, e.g. bolts, of the plug-plug shaft fastener 3105 runs through through-holes of the double-socket connector 680, and joins circumferential plug shaft clamps 3142, 3162 which engage respective plug shaft fastening portions 130, 630.

According to further embodiments, a double-plug connector 780 is provided. As shown in Fig. 12, the double-plug connector 780 includes a first tapered plug end portion 782 for engaging a first tapered socket end portion, and a second tapered plug end portion 783 for engaging a second tapered socket end portion. The double-plug connector 780 may be adapted to be enveloped by a first and second socket shaft. The double-socket connector 780 may be a double-socket disc. The double-plug connector 780 may have coaxial through-holes for passing fastening means therethrough, the coaxial through-holes typically being arranged at its outer circumference.

According to yet further embodiments, a socket-socket shaft connection system 800 is provided which includes two socket shafts 200, 700, e.g. socket shafts as described with respect to Figs. 5 and 6. The shaft connection system further includes a double-plug connector 780, which includes two tapered plug end portions 782, 783 engaging the respective tapered socket end portions 210, 710 of the two socket shafts 200, 700. The shaft connection system may also include a socket-socket shaft fastener 3104, which may be similar to, or identical with, the plug-socket shaft fastener 3103 described with respect to Fig. 8, except that, instead of a spacer ring, the shaft rings 3142, 3162 themselves provide stability against bending under pressure from the securing portion 318. To this aim, the shaft rings 3142, 3162 include, in their outermost part, longitudinal protrusions forming a ring-like structure. Typically, the securing portion 318, e.g. bolts, of the socket-socket shaft fastener 3104 runs through through-holes of the double-plug connector 780, and joins circumferential socket shaft clamps 3141, 3161 which engage respective socket shaft fastening portions 230, 730.

The first socket shaft may be the gearbox shaft, the second socket shaft the main shaft of the wind turbine or vice versa.

According to further embodiments, a shaft connection system is provided. The shaft connection system includes a first shaft with a first tapered end portion and a second shaft with a second tapered end portion. In some embodiments, the shaft connection system is a plug-socket shaft connection system, e.g. as described in embodiments with respect to Figs. 8 and 10. In the plug-socket shaft connection system, the first shaft is a plug shaft and the second shaft is a socket shaft. In other embodiments, the shaft connection system is a plug-plug shaft connection system, e.g. as described in embodiments with respect to Fig. 11. In the plug-plug shaft connection system, the first shaft is a plug shaft and the second shaft is a plug shaft as well. In yet other embodiments, the shaft connection system is a socket-socket shaft connection system, e.g. as described in embodiments with respect to Fig. 12. In the socket-socket shaft connection system, the first shaft is a socket shaft and the second shaft is a socket shaft as well.

According to yet further embodiments, a method of connecting a plug shaft and a socket shaft of a wind turbine is provided. The method includes engaging a tapered plug end portion of the plug shaft with a tapered socket end portion of the socket shaft. The method may further include fastening the plug shaft and the socket shaft, e.g. by a shaft fastener.

In a further embodiment, a method of connecting a first plug shaft and a second plug shaft of a wind turbine is provided. The method includes engaging a tapered plug end portion of the first plug shaft with a first tapered socket end portion of a double-socket connector, and engaging a tapered plug end portion of the second plug shaft with a second tapered socket end portion of the double-socket connector. The method may further include fastening the first plug shaft and the second plug shaft, e.g. by a shaft fastener.

In a further embodiment, a method of connecting a first socket shaft and a second socket shaft of a wind turbine is provided. The method includes engaging a tapered socket end portion of the first socket shaft with a first tapered plug end portion of a double-plug connector, and engaging a tapered socket end portion of the second socket shaft with a second tapered plug end portion of the double-plug connector. The method may further include fastening the first socket shaft and the second socket shaft, e.g. by a shaft fastener.

In still other embodiments, a plug shaft and/or a socket shaft and/or a shaft connection system according to any of the embodiments described herein is used in wind turbine of a wind power plant.

Exemplary embodiments of systems and methods for connecting shafts of a wind turbine are described above in detail. The systems and methods are not limited to the specific embodiments described herein, but rather, components of the systems and/or steps of the methods may be utilized independently and separately from other components and/or steps described herein. For example, the plug and socket shafts and connection systems are not limited to practice with only the wind turbine systems as described herein. Rather, the exemplary embodiment can be implemented and utilized in connection with many other applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A plug shaft for use in a shaft connection system of a wind turbine, the plug shaft comprising:
   a tapered plug end portion for engaging a tapered socket end portion, the tapered socket end portion being part of the shaft connection system.
2. The plug shaft according to clause 1, further comprising:
   a plug shaft fastening portion for fastening the plug shaft to the tapered socket end portion in the shaft connection system.
3. The plug shaft according to any preceding clause, wherein the plug shaft fastening portion is a circumferential groove in an outer surface of the plug shaft.
4. A socket shaft for use in a shaft connection system of a wind turbine, the socket shaft comprising:
   a tapered socket end portion for engaging a tapered plug end portion, the tapered plug end portion being part of the shaft connection system.
5. The socket shaft according to any preceding clause, further comprising:
   a socket shaft fastening portion for fastening the socket shaft to the tapered plug end portion in the shaft connection system.
6. The socket shaft according to any preceding clause, wherein the socket shaft fastening portion is a circumferential groove in an outer surface of the socket shaft.
7. A shaft connection system of a wind turbine, comprising:
   a first shaft comprising a first tapered end portion; and
   a second shaft comprising a second tapered end portion.
8. The shaft connection system according to any preceding clause,
   wherein the first shaft is a plug shaft including a tapered plug end portion;
   the second shaft is a socket shaft including a tapered socket end portion; and wherein the tapered plug end portion engages the tapered socket end portion.
9. The shaft connection system according to any preceding clause, further comprising:
   a plug-socket shaft fastener fastening the plug shaft and the socket shaft.
10. The shaft connection system according to any preceding clause, wherein the plug shaft further includes a plug shaft fastening portion and the socket shaft includes a socket shaft fastening portion, and wherein the plug-socket shaft fastener engages both the plug shaft fastening portion and the socket shaft fastening portion.
11. The shaft connection system according to any preceding clause, wherein the plug-socket shaft fastener includes:
   a circumferential plug shaft clamp engaging the plug shaft fastening portion;
   a circumferential socket shaft clamp engaging the socket shaft fastening portion;
      and
   a securing portion joining the plug shaft clamp and the socket shaft clamp.
12. The shaft connection system according to any preceding clause, wherein the plug-socket shaft fastener includes:
   a circumferential socket shaft clamp engaging the socket shaft fastening portion; and
   a securing portion joining the socket shaft clamp and the plug shaft fastening portion.
13. The shaft connection system according to any preceding clause, wherein the first shaft is a plug shaft, the first tapered end portion is a first tapered plug end portion, the second shaft is a plug shaft, and the second tapered end portion is a second tapered plug end portion.
14. The shaft connection system according to any preceding clause, further comprising:
   a circumferential double-socket connector including a first tapered socket end portion engaging the first tapered plug end portion and a second tapered socket end portion engaging the second tapered plug end portion.
15. The shaft connection system according to any preceding clause, further comprising:
   a plug-plug shaft fastener fastening the first plug shaft and the second plug shaft.
16. The shaft connection system according to any preceding clause, wherein the first plug shaft further includes a first plug shaft fastening portion and the second plug shaft includes a second plug shaft fastening portion, and wherein the plug-plug shaft fastener engages both the first plug shaft fastening portion and the second plug shaft fastening portion for fastening the first plug shaft and the second plug shaft.
17. The shaft connection system according to any preceding clause, wherein the plug-plug shaft fastener includes:
   a first circumferential plug shaft clamp engaging the first plug shaft fastening portion;
   a second circumferential plug shaft clamp engaging the second plug shaft fastening portion; and
   a securing portion joining the first plug shaft clamp and the second plug shaft clamp through the double-socket connector.
18. A method of connecting a first shaft and a second shaft of a wind turbine, the method comprising:
   connecting a tapered end portion of the first shaft with a tapered end portion of the second shaft.
19. The method according to any preceding clause, wherein:
   the first shaft is a plug shaft, the tapered end portion of the first shaft is a tapered plug end portion, the second shaft is a socket shaft, and the tapered end portion of the second shaft is a tapered socket end portion, and wherein connecting the tapered end portions includes:
      engaging the tapered plug end portion of the plug shaft with the tapered socket end portion of the socket shaft.
20. The method according to any preceding clause, wherein:
   the first shaft is a first plug shaft, the tapered end portion of the first shaft is a tapered plug end portion of the first plug shaft, the second shaft is a second plug shaft, and the tapered end portion of the second shaft is a tapered plug end portion of the second plug shaft, and wherein connecting the tapered end portions includes:
      engaging the tapered plug end portion of the first plug shaft with a first tapered socket end portion of a double-socket connector;
      engaging the tapered plug end portion of the second plug shaft with a second tapered socket end portion of the double-socket connector.

## Claims

1. A plug shaft (100, 600) for use in a shaft connection system (300, 500) of a wind turbine, the plug shaft comprising:
a tapered plug end portion (110, 610) for engaging a tapered socket end portion (210, 710, 682, 683) in the shaft connection system.

2. The plug shaft according to claim 1, further comprising:
a plug shaft fastening portion (130, 630) for fastening the plug shaft to the tapered socket end portion in the shaft connection system, wherein the plug shaft fastening portion typically is a circumferential groove in an outer surface (120, 620) of the plug shaft.

3. A socket shaft (200, 700) for use in a shaft connection system (300, 800) of a wind turbine, the socket shaft comprising:
a tapered socket end portion (210, 710) for engaging a tapered plug end portion (110, 610, 782, 783) in the shaft connection system.

4. The socket shaft according to claim 3, further comprising:
a socket shaft fastening portion (230, 730) for fastening the socket shaft to the tapered plug end portion in the shaft connection system, wherein the socket shaft fastening portion typically is a circumferential groove in an outer surface (220) of the socket shaft.

5. A shaft connection system (300, 500, 800) of a wind turbine comprising:
a first shaft (100, 200, 600, 700) including a first tapered end portion (110, 210, 610, 710); and
a second shaft (100, 200, 600, 700) including a second tapered end portion (110, 210, 610, 710), wherein the shaft connection system typically includes:
a shaft fastener (3103, 3105, 3104) fastening the first shaft and the second shaft.

6. The shaft connection system according to claim 5, wherein the first shaft is a plug shaft (100) according to any of the claims 1 to 2, the first tapered end portion being the tapered plug end portion (110),
the second shaft is a socket shaft (200) according to any of the claims 3 to 4, the second tapered end portion being the tapered socket end portion (210), and
wherein the tapered plug end portion (110) of the first plug shaft (100) engages the tapered socket end portion (210) of the socket shaft (200)

7. The shaft connection system according to claim 5, wherein the first shaft is a first plug shaft (100) according to any of the claims 1 to 2, and the second shaft is a second plug shaft (600) according to any of the claims 1 to 2, and wherein the shaft connection system further includes:
a circumferential double-socket connector (680) which includes: a first tapered socket end portion (683) engaging the first tapered plug end portion (110) of the first plug shaft, and a second tapered socket end portion (682) engaging the second tapered plug end portion (610).

8. The shaft connection system according to any of claims 5 to 7, wherein the shaft fastener includes:
a circumferential first shaft clamp (3162, 3161) engaging the first shaft;
a circumferential second shaft clamp (3141, 3142) engaging the second shaft; and
a securing portion (318) joining the first shaft clamp and the second shaft clamp.

9. The shaft connection system according to claim 7 or claim 8, further comprising:
a plug-plug shaft fastener (3105) fastening the first plug shaft and the second plug shaft, wherein the plug-plug shaft fastener includes:
a first circumferential plug shaft clamp (3162) engaging the first plug shaft;
a second circumferential plug shaft clamp (3142) engaging the second plug shaft;
and
a securing portion (318) joining the first plug shaft clamp and the second plug shaft clamp through the circumferential double-socket connector.

10. A method of connecting a first shaft and a second shaft of a wind turbine, the method comprising:
connecting a tapered end portion of the first shaft with a tapered end portion of the second shaft, wherein the first shaft typically is a plug shaft according to any of claims 1 to 2 or a socket shaft according to any of claims 3 to 4, the second shaft typically is a plug shaft according to any of claims 1 to 2 or a socket shaft according to any of claims 3 to 4, and wherein the first and second shafts typically form, when connected, a shaft connection system according to any of claims 5 to 9.
